Europäisches Patentamt

European Patent Office

Office européen des brevets

(11) Publication number: 0 337 700 A2

# EUROPEAN PATENT APPLICATION

(21) Application number: 89303515.4

(22) Date of filing: 10.04.89

(51) Int. Cl.⁴: G01N 21/91 , G21C 17/00 , G01M 3/00

(30) Priority: 15.04.88 US 182018

(43) Date of publication of application:
18.10.89 Bulletin 89/42

(84) Designated Contracting States:
BE CH ES FR GB IT LI SE

(71) Applicant: WESTINGHOUSE ELECTRIC CORPORATION
Westinghouse Building Gateway Center
Pittsburgh Pennsylvania 15222(US)

(72) Inventor: Metals, Michael Joseph
3817 Edinburg Drive
Murrysville, PA 15668(US)
Inventor: Clark, William Guy Jr.
4215 Colonial Drive
Murrysvilla, PA 15667(US)

(74) Representative: van Berlyn, Ronald Gilbert
23, Centre Heights
London, NW3 6JG(GB)

(54) Pen rubber mold maker apparatus and method for inspecting the inside surface of a tubular member.

(57) Apparatus (170) and method for obtaining a negative replica image of the inside surface (45) of a tube (40). The apparatus (170), which is capable of being inserted in the tube (40), comprises a container (190) defining a chamber (300) therein for receiving mold material (192) and a piston (340) matingly slidably disposed in the chamber (300) for pushing the mold material (192) through the chamber (300). Connected to the container (190) is a shaft (230) having a passageway (400) therein in communication with the chamber (300) for receiving the mold material (192). The shaft (230) also has an outlet port (410) in communication with the passageway (400) for exit of the mold material (192) from the passageway (400) to the inside surface (45) of the tube (40). Outwardly extending from the shaft (230) to near the inside surface (45) of the tube (40) are upper and lower flanges (250, 260) having the outlet port (410) interposed therebetween. When the piston (340) is translated in the chamber (300), the mold material (192) is forced from the chamber (300), through the outlet port (410), and onto the inside surface (45) of the tube (40) for obtaining the negative replica image of the inside surface (45).

FIG. 4

# PEN RUBBER MOLD MAKER APPARATUS AND METHOD FOR INSPECTING THE INSIDE SURFACE OF A TUBULAR MEMBER

## TECHNICAL FIELD

This invention relates generally to inspection of surfaces for defects. and more specifically relates to an apparatus and method for inspecting the inside surface of a tubular member such that a permanent record of relatively small indications present in the surface can be obtained and accurately measured.

## BACKGROUND OF THE INVENTION

The inside surfaces of tubular members, such as nuclear reactor steam generator tubes, may develop surface and volume flaws, commonly referred to in the art as indications, which may be due to stress in and corrosion of the tube. Such stress and corrosion may occur during the operation of the nuclear steam generator. In this regard, it is well known in the art that a nuclear reactor steam generator is a device for generating steam when heat is transferred by conduction through a heat conductor boundary separating a radioactive primary fluid from a non-radioactive secondary fluid. The steam generator includes a plurality of tubular members through which the primary fluid flows. The walls of the tubular members function as the heat conductor boundary for conducting heat from the primary fluid to the secondary fluid, which secondary fluid surrounds the outside surface of the tubular members. The primary fluid obtains a temperature higher than the secondary fluid; thus, heat flows from the primary fluid to the secondary fluid through the walls of the tubular members. As the temperature of the secondary fluid increases, the secondary fluid reaches saturation temperature due to the continuing addition of heat to the secondary fluid from the primary fluid. As the temperature of the secondary fluid rises above its saturation temperature, increasing fractions of the secondary fluid enter the vapor phase thereby producing steam. The steam is transported to a steam turbine-generator for producing electricity in a manner well known in the art of nuclear power production.

As indicated above, the primary fluid flowing in the tubes of the nuclear steam generator is radioactive; therefore, it is desirable that the radioactive primary fluid remains everywhere separated from the non-radioactive secondary fluid so that the secondary fluid is not radioactively contaminated thereby. However, due to tube wall thinning and cracking caused by stress and corrosion during operation, the steam generator tubes may occasionally develop surface and volume flaws and thus may not remain leak-tight. The precise mechanism for initiation of stress and corrosion cracking is unknown. However, laboratory tests attempting to simulate the operating conditions of a typical nuclear steam generator have established the following three contributing and possibly interacting factors: high temperature of the reactor coolant water, the conditions of stress and strain resulting from hard rolling the tubes, and the susceptibility of the tubing material microstructure to intergranular stress and corrosion. If a defective tube is discovered, corrective action may be necessary, such as plugging or sleeving the defective tube.

However, before corrective action may be taken, it is desirable to obtain information concerning which tube may be flawed and the extent of the possible flaws, which are commonly referred to in the art as tube indications. After the defective tube is identified, the defective tube can be plugged or the appropriate section of the defective tube sleeved. As well known in the art of nondestructive examination, determination of which tubes have flaws or indications requiring plugging or sleeving of the tubes may be performed by inspecting the suspect tubes using an eddy current or ultrasonic transducer inspection device which is capable, respectively, of electromagnetically or sonically scanning a suspect tube. A type of ultrasonic inspection device suitable for sonically inspecting tubular members is disclosed in U.S. Patent No. 4,597,294 entitled "Ultrasonic Nondestructive Tubing Inspection System" by Bernard A. Brill, III et al. and assigned to the Westinghouse Electric Corporation located in Pittsburgh, Pennsylvania, U.S.A. A type of eddy current device appropriate for electromagnetically inspecting tubular members is disclosed in U.S. Patent No. 4,668,912 entitled "Eddy Current Inspection Probe and Method for Assembling Same" by Warren R. Junker and assigned to the Westinghouse Electric Corporation. Eddy current techniques use electromagnetic flux to detect tube flaws. While the eddy current technique is successful for the detection and characterization of many types of tubing degradation, such as cracks, pits, wear, etc., these techniques have not proved reliable for the detection of smaller discontinuities with dimensions less than about 10% of the tubing wall thickness. Therefore, when it is necessary to develop a precision characterization of tubing

2

damage to assess projected performance, eddy current methods are not always entirely adequate. On the other hand, ultrasonic examination devices employ the transmission of sonic signals through the structure to be examined. The reflected signal of the ultrasonic device provides information about the structure being examined. The amplitude and frequency of the reflected signal vary as a function of such factors as electrical power input to the ultrasonic device, mass density of the structure being examined, angular orientation of the indication and other factors. However, it is sometimes difficult to unambiguously interpret the reflected signal due to the interaction of the above factors. Consequently, ultrasonic techniques are likewise not always reliable or adequate for examining the inside surface of tubular members to the desired degree of accuracy. It is therefore desirable to use a technique of examination that complements ultrasonic and eddy current examination and that provides means for offering a clear, unambiguous interpretation of inside diameter tube surface damage and which can also resolve signal interpretation problems. Such a technique should provide for unambiguous visual observation and dimensional measurement of the tube flaw or indication.

One technique that does not rely on eddy current or ultrasonic technology for examining the inside surface of tubular members is disclosed by U.S. Patent No. 3,966,871 issued June 29, 1976 in the name of Peter Schroder and entitled "Method and Apparatus for Inspecting Tubular Cavities". The Schroder patent discloses an apparatus in the form of two dams which can be inserted in the tube and pneumatically blown and moved to the zone to be inspected, the trailing one of the dams carrying an elastomer transport tube with it. The dams may be inflatable bodies provided with inflating tubes which they carry along with them when blown into position pneumatically. With the two inflatable bodies provided with a flexible interconnection, the elastomer may then be forced through its transport tube which opens between the two dams. The elastomer is injected under pressure between the dams and forces them apart to the limits of the restraint permitted by their interconnection, the elastomer thus being cast against the surface requiring inspection. After curing, either the inflating tubes, transport tube and/or the interconnection can be used to pull the elastically deformable dams and the casting from the cavity. Although the Schroder patent may disclose a method and apparatus for inspecting tubular cavities using an elastomer that cures into a casting, this patent does not appear to disclose a method and apparatus for inspecting the inside surface of tubular members using a dye penetrant to detect small indications as disclosed herein.

Another device that does not rely on eddy current or ultrasonic techniques for nondestructively examining the inside surface of tubular members for flaws or indications is disclosed by U.S. Patent No. 4,659,530 issued April 21, 1987 in the name of Boyers et al. and entitled "Method of Taking An Impression With An Internal Bore Impression Tool". The Boyers et al. method employs a tool for taking an impression of an area of the internal bore of a tubular member comprising means for directing a casting compound between two flexible membranes which are then forced outwardly so that the outer membrane engages the area to be inspected where the compound forms a resilient mold. When the force against the membranes and mold is removed, the membranes and mold collapse allowing the mold and tool to be retrieved out the bore. However, the Boyers et al. patent does not appear to disclose a method and apparatus for inspecting the inside surface of tubular members using a dye penetrant to detect relatively small indications as disclosed herein.

Therefore, although the above-cited patents appear to disclose a method and apparatus for non-destructively examining tubular members using casting compounds, these patents do not appear to disclose a method and apparatus for inspecting the inside surface of tubular members using a dye penetrant to detect relatively small indications.

Consequently, what is needed is an apparatus and method for inspecting the inside surface of a tubular member such that a permanent record of relatively small indications present in the surface can be obtained and accurately measured.


DISCLOSURE OF THE INVENTION


The invention provides an apparatus and method for inspecting the inside surface of a tubular member such that a permanent negative replica image of relatively small flaws and defects (i.e., indications) present in the surface can be obtained and accurately measured.

In one embodiment of the invention the apparatus, which is capable of being inserted into the tubular member, comprises a generally cylindrical container defining a chamber therein for holding mold material. Disposed in the chamber is a generally cylindrical piston having a piston head on one side thereof and a piston bottom on the other side thereof. The container further comprises a first container end nearer the piston bottom and a second container end nearer the piston head. Extending through the first container end and to the chamber is a channel for receiving hydraulic fluid therethrough from a conduit which is in communication with the channel at one end of the conduit. The other end of the conduit is in fluid communication with a fluid reservoir for supplying hydraulic fluid into the conduit, through the channel, into the chamber and to the piston bottom for translating the piston toward the second container end. The second container end has a threaded bore therethrough in communication with the chamber for receiving the threaded proximal end of a flexible shaft and for exit of the mold material from the chamber. The shaft, which is capable of being threadably engaged in the bore, has a generally cylindrical longitudinal passageway formed therein in communication with the chamber for receiving the mold material from the chamber when the piston, acting under hydraulic pressure, pushes the mold material residing on the piston head toward the threaded bore in the second container end. Laterally extending from the passageway to the external surface of the shaft is an outlet port for exiting the mold material from the passageway to the inside surface of the tubular member so that a permanent negative replica of the inside surface may be obtained. The shaft also includes upper and lower flanges in spaced-apart relation and outwardly extending from the shaft to near the inside surface of the tubular member. The upper and lower flanges are spaced-apart such that the outlet port is interposed therebetween. When the apparatus is inserted in the tubular member the upper flange, the lower flange, the outside surface of the shaft, and the inside surface of the tubular member define a replicate cavity for receiving the mold material and for confining the mold material to the area of the tubular member to be inspected. Although the preferred embodiment of the apparatus of the invention provides for a hydraulically driven piston, another embodiment of the apparatus of the invention provides for a mechanically driven piston.

The apparatus of the invention also includes a dye penetrant applicator device comprising an elongated substantially flexible spray wand for spraying a suitable dye penetrant onto the inside surface of the tubular member. The wand, which is capable of being inserted into the tubular member and traversed along the inside surface thereof, has a hollow portion therein for receiving the dye penetrant. Disposed at a predetermined location along the length of the wand is at least one spray orifice in fluid communication with the hollow portion for exit of the dye penetrant from the wand to the inside surface of the tubular member. The wand is connected to a substantially flexible tubular carrier capable of being inserted into the tubular member and capable of carrying the wand along the inside of the tubular member. The carrier is connected to a pumping device which is in turn connected to a dye penetrant reservoir that supplies the dye penetrant through the carrier, into the hollow portion of the wand, out the spray orifice, and onto the inside surface of the tube when the pumping device is operated.

Moreover, the apparatus of the invention further comprises a tube pellet cleaning assembly for cleaning the inside surface of the tubular member before the dye penetrant is applied and after the dye penetrant is applied to remove excess dye penetrant from the inside surface. The cleaning assembly includes a generally flexible hydraulic hose having a hose end-fitting integrally connected to one end thereof, which end-fitting includes a generally cylindrical recess for matingly receiving the end of the tubular member. The other end of the hydraulic hose is connected to a hydraulic fluid pressure reservoir for supplying hydraulic fluid, such as air, to the inside of the tubular member. Matingly, slidably disposed in the tubular member is a tube pellet, which is capable of sliding along the inside surface of the tubular member when sufficient hydraulic fluid pressure from the fluid pressure reservoir is applied to the inside of the tubular member. As the tube pellet moves along the inside surface, due to the action of the hydraulic fluid, the tube pellet cleans the inside surface by removing foreign matter and/or excess dye penetrant.

The apparatus of the invention also includes an alternative means for cleaning the inside surface of the tubular member. This alternative means includes a tube slug stringer device which may be used for cleaning the inside surface before the dye penetrant is applied and after the dye penetrant is applied to remove excess dye penetrant. The stringer device comprises an elongated generally cylindrical stringer having at least one generally cylindrical slug received thereon and having a stringer cap removably connected to the distal end thereof. The stringer cap prevents the slug from sliding-off the distal end of the stringer. The stringer device further comprises a generally cylindrical disk-shaped slug support platform which is capable of being adjustably attached to the stringer for supporting the slug. Moreover, either the tube pellet cleaning assembly or the tube slug stringer device may be used to apply the dye penetrant in addition to cleaning the inside surface of the tubular member.

The method of the invention when practiced in combination with the apparatus of the invention provides a process for inspecting the inside surface of the tubular member such that a permanent negative replica image of the inside surface of the tubular member is obtained. The method of the invention may include first cleaning the inside surface of the tubular member using the tube pellet cleaning assembly or the tube slug stringer device to remove foreign matter from the inside surface so that a sharp negative replica of the inside surface can be obtained. Next, the portion of the inside surface to be inspected is coated with a suitable fluorescent or non-fluorescent dye penetrant by inserting the spray wand into the tubular member and operating the pumping device. The dye penetrant is allowed to dwell or reside on the inside surface a sufficient time for penetration of the surface indications that may be present in the inside surface. Alternatively, the dye penetrant may be applied to the inside surface using the tube pellet cleaning assembly or the slug stringer device in a manner which swabs the inside surface with the dye penetrant. Excess dye penetrant may be removed from the inside surface using the tube pellet cleaning assembly if it has not been used to swab the inside surface with dye penetrant. Then, the apparatus of the invention, having the mold material disposed therein is inserted into the tubular member and moved to the locus of the indication for obtaining the negative replica image of the indication. Once at the locus of the indication, the piston is translated (either hydraulically or mechanically) in the container chamber such that the mold material is forced from the chamber, into the shaft passageway, out through the shaft outlet port and onto the inside surface where the mold material is allowed to cure for a sufficient time to obtain a resilient mold of the indication. After the mold cures, the apparatus of the invention is retrieved from the tubular member.

After the apparatus of the invention is retrieved from the tubular member, the tubular member may be cleaned using the tube pellet cleaning assembly or the slug stringer device so that residual dye penetrant is removed from the inside surface of the tubular member. The mold is visually inspected for a negative replica relief of the indication, which will be highlighted by the dye penetrant that was pulled into the relief by capillary action. If non-fluorescent dye penetrant was used, the negative relief of the indication will be visible under normal lighting conditions. If fluorescent dye penetrant was used, the negative relief of the indication will be visible under black light.

## BRIEF DESCRIPTION OF THE DRAWINGS

While the specification concludes with claims particularly pointing out and distinctly claiming the subject matter of the invention, it is believed the invention will be better understood from the following description, taken in conjunction with the accompanying drawings wherein:

Figure 1 is a view in vertical section of a nuclear steam generator with parts removed for clarity;

Figure 2 is a view of the invention disposed in a steam generator tube which is inserted through an aperture in a steam generator tube sheet;

Figure 3 is an orthogonal view in partial vertical section of the invention disposed in the steam generator tube;

Figure 4 is a view in vertical section of the invention disposed in the steam generator tube;

Figure 5 is a view in partial vertical section of a first alternative embodiment of the invention disposed in a steam generator tube;

Figure 6 is a view in vertical section of a second alternative embodiment of the invention disposed in a steam generator tube;

Figure 7 is a view in vertical section of a third alternative embodiment of the invention disposed in a steam generator tube;

Figure 8 is a view in partial vertical section of a dye penetrant applicator device disposed in operative condition for applying a dye penetrant to the inside surface of the tube;

Figure 9 is an orthogonal view in vertical section of a tube pellet cleaning assembly disposed in operative condition for cleaning the inside surface of the tube;

Figure 10 is an orthogonal view in vertical section of a tube slug stringer device disposed in operative condition for cleaning the inside surface of the tube; and

Figure 11 is a view in vertical section of a slug support platform.

## DESCRIPTION OF THE PREFERRED EMBODIMENTS

Occasionally it is necessary to nondestructively examine the inside surface of tubular members, such as nuclear steam generator tubes, for indications such as relatively small flaws and cracks so that a permanent record of the indications that may be present in the surface can be obtained and accurately measured.

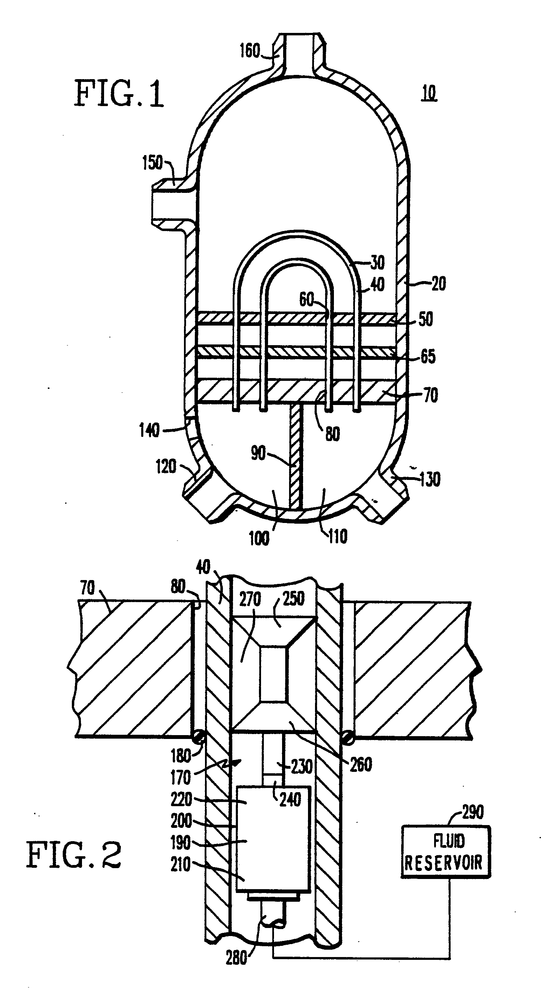

Referring to Fig. 1, a nuclear steam generator is referred to generally as 10 and comprises a generally cylindrical shell 20. Disposed in shell 20 is a vertical steam generator tube bundle 30 having a plurality of vertical, U-shaped steam generator tubes 40 (only two of which are shown), which may be mill annealed, thermally treated INCONEL 600. It will be understood that each tube 40 has an inside surface 45 (see Fig. 2). Disposed at various locations along the length of bundle 30 are a plurality of horizontal, circular tube support plates 50, which may be Type 405 stainless steel, having holes 60 therethrough for receiving each tube 40, for laterally supporting tubes 40 and for reducing flow induced vibration in tubes 40. Additional support for tubes 40 may be provided in the U-bend region of bundle 30 by a plurality of anti-vibration bars (not shown) which may be chrome-plated INCONEL.

Referring again to Fig. 1, disposed in shell 20 below a bottom-most support plate 65 is a horizontal, circular tube sheet 70 having a plurality of vertical apertures 80 therethrough for receiving the ends of tubes 40, which ends of tubes 40 extend a predetermined distance through and below apertures 80. Tube sheet 70 is sealingly attached, which may be by welding, around its circumferential edge to shell 20. Also disposed in shell 20 below tube sheet 70 is a vertical, semi-circular divider plate 90 sealingly attached, which may be by welding, to shell 20 along the circumferential edge of divider plate 90. Divider plate 90 is also sealingly attached, which may be by welding, to tube sheet 70 along the flat edge of divider plate 90. Divider plate 90 divides the region below tube sheet 70 into an inlet plenum chamber 100 and an outlet plenum chamber 110. Disposed on outer shell 20 below tube sheet 90 are a first inlet nozzle 120 and a first outlet nozzle 130 in fluid communication with inlet plenum chamber 100 and with outlet plenum chamber 110, respectively. A plurality of manway holes 140 (only one of which is shown) are disposed through shell 20 below tube sheet 70 for providing access to inlet plenum chamber 100 and outlet plenum chamber 110. Also disposed on shell 20 above the upper-most support plate 50 is a second inlet nozzle 150 for entry of a non-radioactive secondary fluid into shell 20. A second outlet nozzle 160 is disposed on the top of shell 20 for exit of steam from shell 20.

During operation of steam generator 10, a radioactive primary fluid, which may be water, enters inlet plenum chamber 100 through first inlet nozzle 120 and flows through tubes 40 to outlet plenum chamber 110 where the primary fluid exits steam generator 10 through first outlet nozzle 130. The secondary fluid, which is water, enters shell 20 through second inlet nozzle 150 and flows downwardly from second inlet nozzle 150 through an annular downcomer (not shown) until the secondary fluid is in fluid communication with tube sheet 70. The secondary fluid then leaves the annular downcomer flowing upwardly by natural convection around bundle 30 where the secondary fluid boils and vaporizes due to the conductive heat transfer from the primary fluid to the secondary fluid through the walls of tubes 40 which comprise bundle 30. The vaporized water or steam flows upwardly from bundle 30 and exits steam generator 10 through second outlet nozzle 160. In a manner well known in the art of nuclear power production, the steam is ultimately transported to a steam turbine-generator (not shown) for producing electricity after the steam exits steam generator 10 through second outlet nozzle 160. In order to avoid the radioactive primary fluid radioactively contaminating the non-radioactive secondary fluid, it is desirable that tubes 40 remain leak-tight. Therefore, inside surface 45 of tube 40 is inspected for tube indications such as cracks and flaws to ensure that tube 40 remains leak-tight. Such inspection may be accomplished in the manner of the invention by obtaining a permanent negative replica image of inside surface 45 of tube 40, which replica would accurately show the presence and extent of any tube indications in the portion of tube 40 inspected.

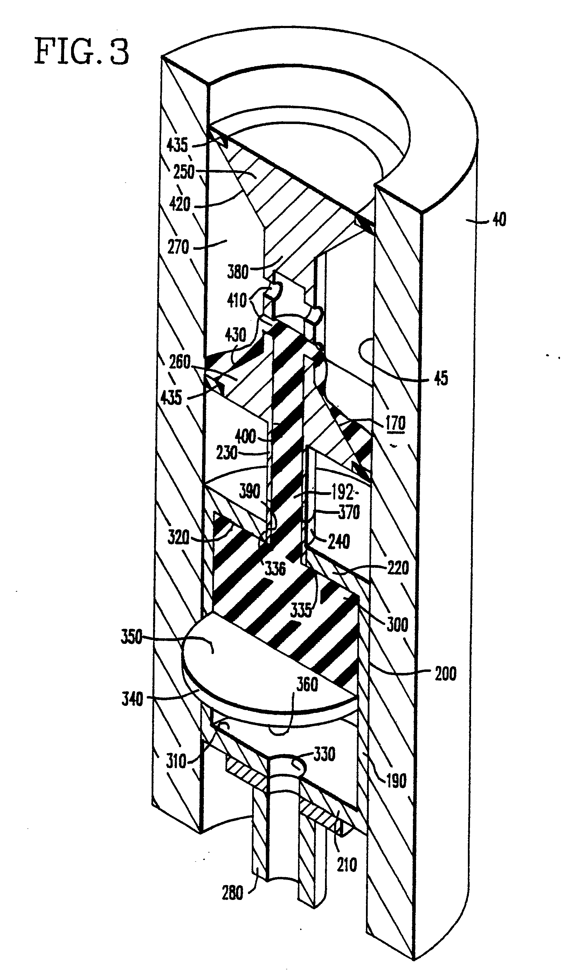

Turning now to Fig. 2, there is illustrated the subject matter of the present invention which is a pen rubber mold maker apparatus generally referred to as 170. The invention is illustrated in Fig. 2 operatively disposed in tube 40 which is shown received through aperture 80 of tube sheet 70. Pen rubber mold maker apparatus 170 may be transported to tube 40 in any suitable manner known in the art such as by a remotely operated mechanical arm (not shown). As shown in Fig. 2, tube 40 may be supported in aperture 80 by a weldment 180 joining tube 40 to tube sheet 70. As described in more detail hereinafter, pen rubber mold maker apparatus 170 comprises a generally cylindrical container 190 for holding mold material 192 therein (see Fig. 3). Container 190 has an outside surface 200, a first container end 210 and a second container end 220. Pen rubber mold maker apparatus 170 further comprises a generally cylindrical shaft 230 which may be connected by a hollow generally cylindrical flexible joint 240 to second container end 220 of container 190. Shaft 230 is capable of receiving mold material 192 from container 190 in a manner to be described in more detail hereinbelow. Shaft 230 includes an upper flange 250 and a lower flange 260. Upper and lower flanges 250 and 260 may have a generally circular and horizontal transverse cross sectional configuration. As described in more detail hereinafter upper flange 250, lower flange 260, shaft 230 and inside surface 45 define a replicate cavity 270 for receiving mold material 192, which may be a silastic encapsulant material mixed with a curing catalyst. The silastic encapsulant material may be silicone rubber for obtaining a resilient negative replica image of inside surface 45 of tube 40. The curing catalyst may be selected from those readily available in the art. As described in more detail hereinafter, connected to first container end 210 is a generally cylindrical conduit 280 which is in fluid communication with a fluid reservoir 290 for supplying fluid to and withdrawing fluid from container 190. Moreover, shaft 230 may be sufficiently flexible and sufficiently bendable for traversing the U-bend region of tube 40 without fracturing. Shaft 230 should also possess suitable fatigue resistance for withstanding stressing as shaft 230 traverses the U-bend region of tube 40. For reasons described hereinbelow, shaft 230 may also exhibit suitable resistance to corrosion by solvents. Also, because upper and lower flanges 250 and 260 may slide along the inside surface 45 of tube 40, upper and lower flanges 250 and 260 may also have a low coefficient of friction and minimal slip-stick for easily sliding along inside surface 45 of tube 40 and for preventing marring of inside surface 45. Therefore, shaft 230 and upper and lower flanges 250 and 260 may be a thermoplastic polymer such as CADCO DELRIN available from Cadillac Plastic and Chemical Company located in Monroeville, Pennsylvania, U.S.A. Alternatively, shaft 230 may be CADCO UHMV which is a polyethylene composition available from Cadillac Plastic and Chemical Company.

Mold material 192 referred to above may be silicone rubber suitably mixed with a curing catalyst. The silicone rubber may be any suitable silicone rubber material such as DOW CORNING 3110 RTV SILICONE RUBBER available from the DOW Corning Corporation located in Midland, Michigan. The catalyst which may be mixed with DOW CORNING 3110 RTV SILICONE RUBBER should preferably be DOW CORNING RTV CATALYST S, CATALYST F, CATALYST 1 OR CATALYST 4 available from the DOW Corning Corporation. The mixing ratios of DOW CORNING 3110 RTV SILICONE RUBBER to catalyst, the time allotted for the mold material to flow into and fill the tube indications (commonly referred to as working time), and the mold material curing times for each of the four catalysts specified above should preferably be provided as specified in the table below:

| Catalyst | Mixing Ratio | Working Time | Curing Time |
|----------|--------------|--------------|-------------|
| RTV CATALYST S | 10:1 | 50 minutes | 6.5 hours |
| RTV CATALYST F | 10:1 | one minute | two hours |
| RTV CATALYST 1 | 10:1 | 150 minutes | 24 hours |
| RTV CATALYST 4 | 100:1 | four minutes | 20 minutes |

Moreover, the silicone rubber and catalyst mold material mixture should be suitably mixed to avoid introducing air into the mixture. However, trapped air can be removed from the mixture by exposing the mixture to approximately 28 inches of mercury vacuum. When mixed as specified above, the above specified mold material remains flexible from approximately minus 70 degrees Fahrenheit to approximately 400 degrees Fahrenheit. Of course, if the silicone rubber and catalyst materials specified above are mixed in ratios different than the ratios stated above, the working times and curing times will differ.

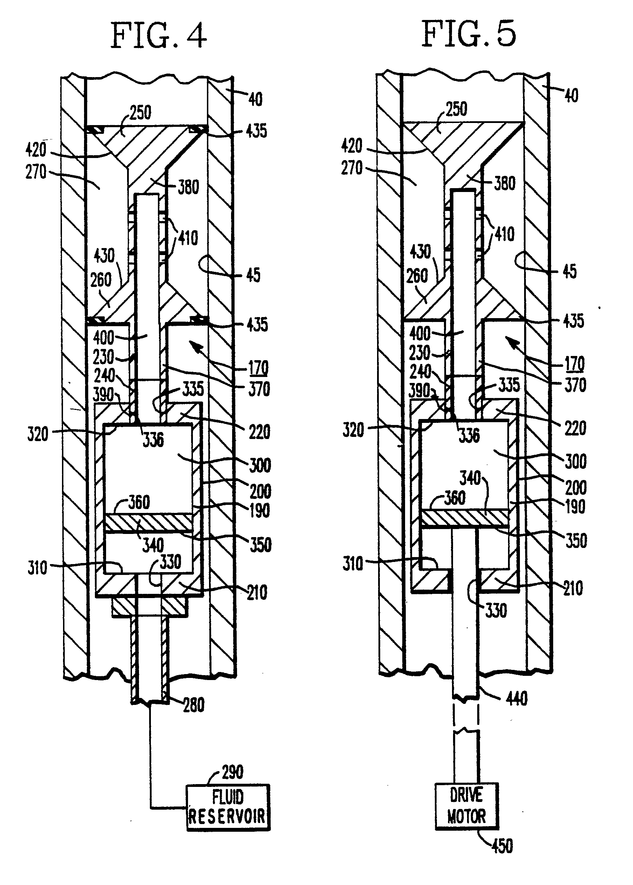

Referring to Figs. 3 and 4, pen rubber mold maker apparatus 170 is shown disposed in tube 40 in operative condition for obtaining a permanent negative replica image of inside surface 45 of tube 40. As shown in Figs. 3 and 4, container 190 defines a generally cylindrical mold material chamber 300 therein for receiving the mold material. Chamber 300 has a first chamber end 310 nearer first container end 210 and a second chamber end 320 nearer second container end 220. First container end 210 of container 190 has a channel 330 extending therethrough from outside surface 200 of container 190 to chamber 300 for receiving hydraulic motive means, such as hydraulic fluid, from conduit 280. For reasons described hereinbelow, the hydraulic fluid flows from a fluid reservoir 290, through conduit 280, through channel 330 and into chamber 300. Second container end 220 has a threaded bore 335 therethrough having internal threads 336 therein for reasons described more fully below. Matingly slidably disposed in chamber 300 is a generally cylindrical piston 340 for pushing mold material 192 through chamber 300. Piston 340 has a substantially flat piston bottom 350 on one side thereof facing first container end 210 and a substantially flat piston head 360 on the other side thereof facing second container end 220. Mold material 192 is disposed in chamber 300 such that the mold material is supported by piston head 360 that also provides a surface against which mold material 192 is pushed through chamber 300 as piston 340 is hydraulically translated towards second chamber end 320 when hydraulic fluid flows from fluid reservoir 290, through conduit 280, through channel 310 and into chamber 300.

Still referring to Figs. 3 and 4, flexible shaft 230 has a proximal end 370 and a distal end 380. Proximal end 370 is defined as that end portion of shaft 230 nearer the end of tube 40 through which pen rubber mold maker apparatus 170 was inserted. Distal end 380 of shaft 170 is defined as that end portion of shaft 230 which is farther from the end of tube 40 through which pen rubber mold maker apparatus 170 was inserted. Proximal end 370 of shaft 230 may include flexible joint 249 integrally attached thereto having external threads 390 thereon for threadably engaging internal threads 336 of bore 335. It will be appreciated that shaft 230 need not include flexible joint 249; rather, flexible joint 249 may be replaced by an uninterrupted continuing portion of flexible shaft 230. Flexible joint 240 adds freedom of movement and hence bending flexibility to shaft 230 for facilitating insertion and flexing movement of pen rubber mold maker apparatus in tube 40. However, even if shaft 230 were not to include flexible joint 240, shaft 230 should nonetheless include external threads 390 on the proximal end thereof for suitably engaging internal threads 336. Of course, when external threads 390 suitably threadably engage internal threads 336, shaft 230 thereby becomes threadably connected to container 190.

Referring again to Figs. 3 and 4, formed in shaft 230 is a generally cylindrical longitudinal passageway 400 in communication with chamber 300 for receiving mold material 192 from chamber 300. Passageway 400 extends from proximal end 370 to near distal end 380 of shaft 230. Distal end 380 has a generally cylindrical outlet port 410 laterally extending from passageway 400 to the external surface of shaft 230 for exiting the mold material 192 from passageway 400 to inside surface 45 of tube 40 so that a permanent negative replica of inside surface 45 may be obtained. As stated hereinabove, shaft 230 includes upper flange 250 and lower flange 260. Upper flange 250 and lower flange 260 are in spaced-apart relation and outwardly extend from shaft 230 to near inside surface 45 of tube 40. Upper flange 250 is nearer distal end 380. Lower flange 260 is nearer proximal end 390 of shaft 230 but disposed between upper flange 250 and second container end 220. Upper flange 250 and lower flange 260 are spaced-apart such that outlet port 410 is interposed therebetween. When pen rubber mold maker apparatus 170 is disposed in tube 40, upper flange 250, lower flange 260, shaft 230 and the inside surface 45 define the replicate cavity 270. Upper flange 250 and lower flange 260 may also have oppositely disposed upper and lower beveled surfaces 420 and 430, respectively, thereon for supporting mold material 192 and for confining mold material 192 to the portion of inside surface 45 to be inspected. Upper beveled surface 420 upwardly extends from shaft 230 to near inside surface 45 of tube 40. Lower beveled surface 430 downwardly extends from shaft 230 to near inside surface 45 of tube 40. In addition, an elastomeric seal 435 may extend around the marginal edge of upper flange 250 and lower flange 260 for sealing cavity 270 so that mold material 192 does not leak from cavity 270, and to avoid marring of inside surface 45. The seal would also allow the marginal edges of upper and lower flanges 250 and 260 to glide on inside surface 45 and pass any constriction or denting of tube 40 because the seals 435 surrounding the marginal edges would temporarily yield when the seals 435 contact the constriction as upper and lower flanges 250 and 260 glide past the constriction.

With reference to Fig. 5, it will be understood that piston 340 need not be hydraulically driven. For example, piston 340 may be mechanically driven in chamber 300 by a mechanical motive means such as a generally cylindrical pole 440 integrally connected to piston bottom 350 for translating piston 340 in chamber 300. Pole 440, which may be flexible, extends from a suitable drive motor 450 through channel 330 to piston bottom 350. Drive motor 450 may be a drive motor selected from those readily available in the art having rollers (not shown) therein capable of frictionally engaging pole 440 such that pole 440 may be advanced or retracted by the rotating action of the rollers disposed in drive motor 450. Alternatively, pole 440 may have external threads (not shown) thereon for obtaining positive traction and precise movement of pole 440. Of course, when pole 440 has external threads thereon, drive motor 450 may have a suitable gear train (not shown) therein for suitably matingly engaging the threads of pole 440 so that pole 440 may be precisely advanced or retracted by the gear action of drive motor 450.

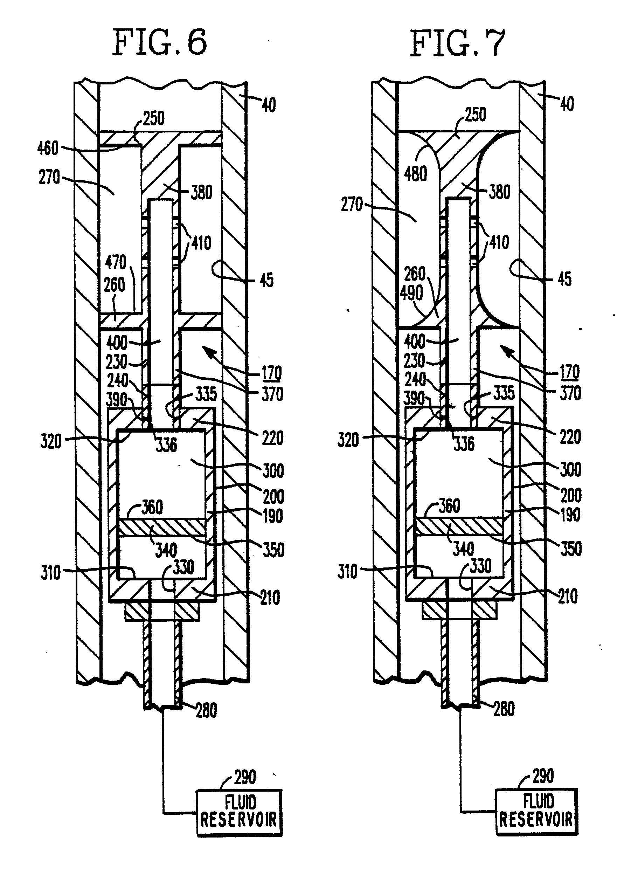

Turning now to Fig. 6, an alternative embodiment of the invention is illustrated having upper flange 250 and lower flange 260 spaced-apart and oppositely disposed for receiving mold material therebetween. In this embodiment of the invention, upper and lower flanges 250 and 260 have upper and lower flat surfaces 460 and 470, respectively, thereon substantially perpendicular to shaft 230 for receiving mold material 192. That is, in this alternative embodiment, upper and lower flanges 250 and 260 have upper and lower flat surfaces 460 and 470 rather than upper and lower beveled surfaces 420 and 430. As explained in detail immediately below, the perpendicular orientation with respect to shaft 230 of upper flat surface 460 and lower flat surface 470 enables upper and lower flanges 250 and 260 to better withstand bending thereof if pen rubber mold maker apparatus 170 is caused to travel through the U-bend region of U-shaped tube 40. In this regard, it will be appreciated that as pen rubber mold maker apparatus 170 traverses the U-bend region of tube 40, pen rubber mold maker apparatus 170 may tend to bend in order to conform to the curvature of the U-bend region. Of course, as pen rubber mold maker apparatus 170 traverses the U-bend region and as pen rubber mold maker apparatus 170 tends to bend, the circumferential edges of upper flange 250 and lower flange 260 will contact and slide on the inside surface 45 of tube 40. When upper and lower flanges 250 and 260 contact inside surface 45 in the U-bend region of tube 40, upper and lower flanges 250 and 260 may bend in a direction opposite to the direction of travel of pen rubber mold maker apparatus 170 due to the coefficient of sliding friction of upper and lower flanges 250 and 260 against inside surface 45. As upper and lower flanges 250 and 260 bend, upper and lower flanges 250 and 260 may experience a bending moment centered around the points of intersection where upper and lower flanges 250 and 260 integrally intersect shaft 230. It will be understood that upper and lower flat surfaces 460 and 470 allow a greater bending moment to be withstood by upper and lower flanges 250 and 260 than would be possible when upper and lower flanges 250 and 260 have upper and lower beveled surfaces 420 and 430, respectively, thereon. In addition, the flat configuration of upper and lower flanges 250 and 260 having upper and lower flat surfaces 460 and 470, respectively, thereon substantially increases the volume of cavity 270 as compared to the volume of cavity 270 defined by upper and lower beveled surfaces 420 and 430. Of course, increasing the volume of cavity 270 allows cavity 270 to receive a greater mass of mold material 192 therein for a given predetermined distance between the spaced-apart upper and lower flanges 250 and 260.

Referring now to Fig. 7, another embodiment of the invention is illustrated having upper flange 250 and lower flange 260 spaced-apart and oppositely disposed for receiving mold material 192 therebetween. In this embodiment of the invention, upper and lower flanges 250 and 260 have substantially concave upper and lower curved surfaces 480 and 490, respectively, thereon for receiving mold material 192. As described immediately below, the curved configuration of curved surfaces 480 and 490 enables upper and lower flanges 250 and 260, respectively, to better withstand bending thereof, as compared to upper and lower beveled surfaces 420 and 430, if pen rubber mold maker apparatus 170 is caused to travel through the U-bend region of U-shaped tube 40. For the reasons stated above, the circumferential edges of upper flange 250 and lower flange 260 may contact and slide on the inside surface 45 of tube 40. Thusly, upper and lower flanges 250 and 260 may bend in a direction opposite to the direction of travel of pen rubber mold maker apparatus 170. As upper and lower flanges 250 and 260 bend, upper and lower flanges 250 and 260 may experience a bending moment centered around the locus of points defining the area of most extreme curvature of curved surfaces 480 and 490. It will be understood that upper and lower curved surfaces 480 and 490 allow a greater bending moment to be withstood by upper and lower flanges 250 and 260 than would be possible when upper and lower flanges 250 and 260 have upper and lower beveled surfaces 420 and 430, respectively, thereon. Moreover, the curved configuration of upper and lower flanges 250 and 260 having upper and lower curved surfaces 480 and 490, respectively, thereon substantially increases the volume of cavity 270 as compared to the volume of cavity 270 defined by upper and lower beveled surfaces 420 and 430. Increasing the volume of cavity 270 permits cavity 270 to hold a greater mass of mold material 192 therein for a given predetermined distance between spaced-apart upper and lower flanges 250 and 260.

As stated above, pen rubber mold maker apparatus 170 is capable of obtaining a permanent negative replica of inside surface 45 of tube 40 such that a permanent record of indications present in inside surface 45 can be obtained and accurately measured. However, it is preferable to first coat the portion of inside surface 45 to be inspected with a temporary stain which will be absorbed by the negative replica of the indications for enhancing the visibility of the indications. The stain, which is referred to in the art as a dye penetrant, will be drawn from the indications into mold material 192 negative replica image of the indications by the well known process of capillary action. In this regard, the dye penetrant itself may be one of two types. The first type of dye penetrant contains a visible or non-fluorescent dye and is visible under normal lighting conditions. The second type of dye penetrant contains a fluorescent dye, which is almost colorless and emits visible light rays when reviewed under black light. The visible or fluorescent dye penetrant may be selected from those commonly available in the art such as visible or fluorescent DP51 DYE PENETRANT available from Sherwin Incorporated located in Los Angeles, California, U.S.A.

As stated hereinabove, the dye penetrant will be drawn from inside surface 45 into the surface of the mold material for enhancing the visibility of the negative replica image of the indications. The size of the negative replica image observable using this invention is limited only by the ability of the human eye to detect the size of the image of the indication in the mold. Thus, this invention is capable of displaying the image of relatively small indications that may have a length as small as approximately one-thirty second of an inch and a width on the order of five to ten mills.

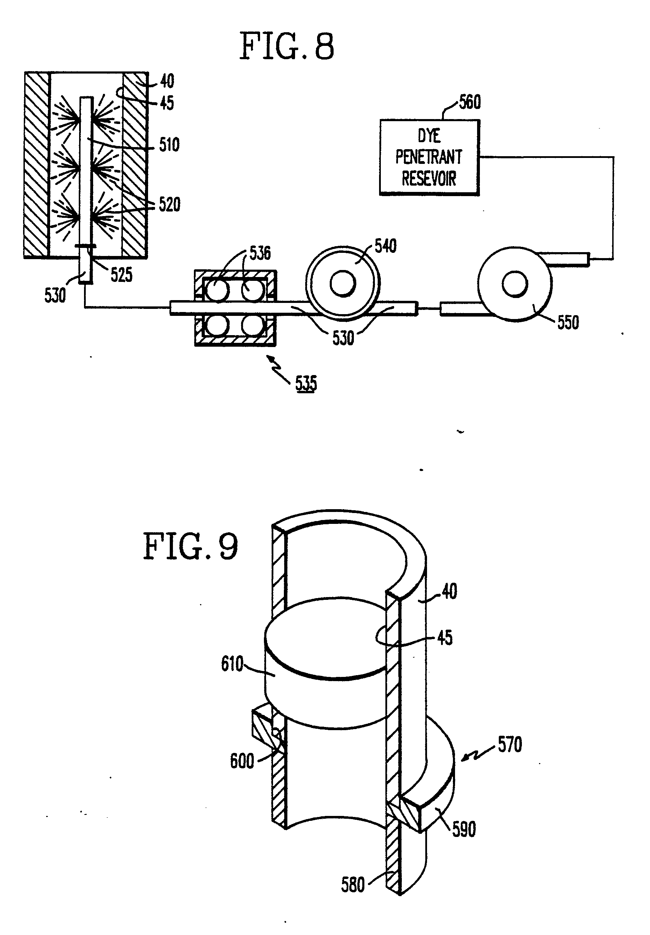

Therefore, turning now to Fig. 8, a dye penetrant applicator device, generally referred to as 500, is operatively disposed for spraying a suitable dye penetrant onto inside surface 45. Dye penetrant applicator device 500 comprises an elongated and substantially flexible generally cylindrical spray wand 510, which is capable of being inserted into tube 40 and traversed along the inside thereof. Wand 510 has a hollow portion (not shown) therein for receiving the dye penetrant. Disposed at a predetermined location along the length of wand 510 is at least one spray orifice 520 in fluid communication with the hollow portion of wand 510 for the exit of dye penetrant from wand 510 to inside surface 45. Wand 510 is connected, such as by a flexible connector referred to generally as 525, to a substantially flexible generally tubular carrier 530, which carrier 530 is capable of being inserted into tube 40 and capable of carrying wand 510 along the inside of tube 40. Carrier 530 may be advanced and retracted in tube 40 by any suitable means such as by a carrier pusher, generally referred to as 535, having a plurality of rollers 536 therein for frictionally engaging carrier 530. Carrier 530 may be wound about a carrier coiler or take-up wheel 540 for storing carrier 530 in a manner that conserves space. Carrier 530 is also suitably connected to a pumping device 550 downstream of carrier coiler 540. Pumping device 550 is in turn connected to a dye penetrant reservoir 560, which contains and supplies the dye penetrant to pumping device 550. Moreover, pumping device 550 is capable of pumping the dye penetrant from dye penetrant reservoir 560, through carrier 530, into wand 510, out orifice 520 and onto surface 45.

Referring to Fig. 9, a tube pellet cleaning assembly, generally referred to 570, is illustrated operatively disposed for cleaning inside surface 45 both before (i.e., pre-cleaning) the dye penetrant is applied to inside surface 45 and after (i.e., post-cleaning) the dye penetrant is applied to inside surface 45. Pre-cleaning inside surface 45 assists in obtaining a crisp negative replica image of the tube indications. Post-cleaning inside surface 45 assists in removal of any excess dye penetrant. Cleaning assembly 570 comprises a generally flexible hydraulic hose 580 having a hose end-fitting 590 integrally connected to one end thereof. End-fitting 590 includes a generally cylindrical recess 600 for matingly receiving the end of tube 40 therein. The other end of hydraulic hose 580 is connected to a hydraulic fluid pressure reservoir (not shown) for supplying hydraulic fluid, such as air or similar gas or a liquid, to the inside of tube 40. Matingly and slidably disposed in tube 40 is a tube pellet 610, which is capable of sliding along inside surface 45 when sufficient hydraulic fluid pressure from the pressure reservoir is applied to the inside of tube 40. Tube pellet 610 may be any suitable absorbant material, such as cotton fiber. Thus, as tube pellet 610 moves along inside surface 45, tube pellet 45 cleans inside surface 45 by mechanically removing foreign matter or dye penetrant from inside surface 45. Moreover, during the post-cleaning process a suitable dye penetrant chemical remover may be used in combination with the mechanical cleaning action of tube pellet 610 for enhancing the cleaning capability of tube pellet 610. Tube pellet 610 is soaked with the chemical remover prior to insertion in tube 40 so that the chemical remover is suitably applied to inside surface 45 as tube pellet 610 is hydraulically pushed along inside surface 45. Alternatively, water may be flushed through hose 580 and tube 40 or tube pellet 610 can be soaked with water and hydraulically pushed through tube 40 for cleaning excess dye penetrant from inside surface 45 when a water-washable dye penetrant is used to coat inside surface 45.

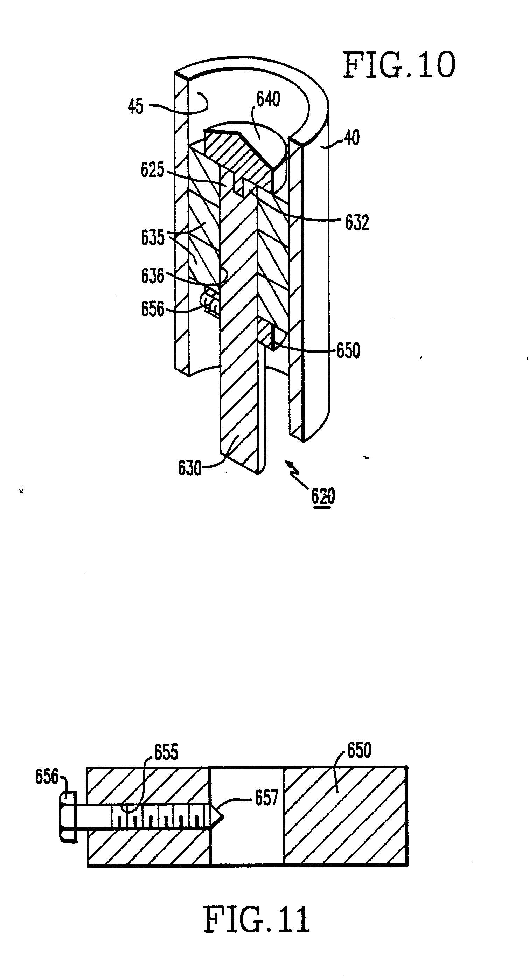

Referring to Fig. 10, a tube slug stringer device, generally referred to as 620 is shown operatively disposed for cleaning inside surface 45 before (i.e., pre-cleaning) the dye penetrant is applied to inside surface 45 and after (i.e., post-cleaning) the dye penetrant has been allowed to dwell on inside surface 45. Pre-cleaning inside surface 45 assists in obtaining a sharp negative replica image of the tube indications. Post-cleaning inside surface 45 assists in removal of any excess dye penetrant from inside surface 45. Thus, slug stringer device 620 may be used instead of tube pellet cleaning assembly 570 for cleaning inside surface 45. Slug stringer device 620 comprises an elongated generally cylindrical stringer 630 having at least one generally cylindrical slug 635 received thereon and having a distal end 632. Slug 635 includes a longitudinal slug bore 636 therethrough for receiving stringer 630. Slug 635 may be any suitable absorbant material available in the art such as cotton fiber. Slug stringer device 620 also includes a stringer cap 640 removably connected, such as by threads, to distal end 632 of stringer 630. Stringer cap 640 prevents slug 635 from sliding-off distal end 632 of stringer 630. Moreover, stringer cap 640 is conveniently removable for placing slug 635 onto stringer 630 and for removing slug 635 from stringer 630. Slug 635 may be placed onto stringer 630 or removed from stringer 630 by threading stringer cap 640 into or unthreading stringer cap 640 out of distal end 632.

As best seen in Figs. 10 and 11, slug stringer device 620 further comprises a horizontal, generally cylindrical disk-shaped slug support platform 650 adjustably attached to stringer 630 for supporting slug 635. It will be appreciated that support platform 650 may be adjustably attached to stringer 630 by any means commonly known in the art for slidably adjustably affixing a member to an elongated body. The adjustable feature of support platform 650 allows support platform 650 to be adjustably slidably positionable along stringer 630 for accommodating one or more slugs 635 on support platform 650. Support platform 650 is capable of being adjusted along stringer 630 until slug 636 abuts stringer cap 640. Support platform 650 is also capable of being affixed to stringer 630 when slug 635 abuts stringer cap 640 so that sliding of slug 635 on stringer 630 is restrained to the portion of stringer 630 between.stringer cap 640 and support platform 650. In this regard, support platform 650 may have a lateral threaded screw bore 655 extending from the marginal edge of support platform 650 to stringer 630, which screw bore 655 is capable of threadably receiving a threaded screw 656 therethrough that can be tightened against stringer 630. Screw 656 may have a conically-shaped point 657 for engaging stringer 630 when screw 656 is tightened against stringer 630 so that support platform 650 becomes securely affixed and to stringer 630. When it is desired to adjust support platform 650 along stringer 630, screw 656 is untightened and support platform is adjusted along stringer 630. When it is desired to affix support platform at a specified location on stringer 630, support platform 659 is moved to that location and screw 656 is tightened against stringer 630. In addition, it will be appreciated that slug stringer device 620 may be advanced and retracted inside tube 40 by any suitable means such as by a reversible stringer drive motor (not shown) having friction rollers therein capable of contacting the outside surface of stringer 630 and moving stringer 630 such that stringer 630 advances or retracts inside tube 40.

The method of the invention described immediately below in combination with pen rubber mold maker apparatus 170 described above can be used to obtain a permanent negative replica image of indications which may be present in inside surface 45 of tube 40. The approximate location and extent of the indications may be determined by first scanning tube 40 with an ultrasonic or eddy current scanning device. Next, the precise location, angular orientation and extent of the indication is determined by the method of the invention. The method of the invention may include first cleaning inside surface 45 (i.e., pre-cleaning) using tube pellet cleaning assembly 570 to remove foreign matter from inside surface 45 so that a sharp negative replica image of the indication is obtained. Inside surface 45 may be pre-cleaned by matingly abutting recess 600 of hose end-fitting 590 sealingly against the end of tube 40 which is received in recess 600. End-fitting 590, which is integrally connected to hose 580 is transported to the end of tube 40 and supported thereat by any suitable means, such as by a remotely operated mechanical arm (not shown). Tube pellet 610 is initially placed in hose 580 or tube 40. Next, hydraulic fluid , such as air or similar gas or liquid, is supplied from the hydraulic fluid pressure reservoir (not shown) to hose 580 for pushing tube pellet 610 along inside surface 45 of tube 40. As tube pellet 610 traverses inside surface 45, tube pellet 610 cleans inside surface 45 by mechanically removing foreign matter which may be present on inside surface 45. It will be appreciated that hydraulic pressure may be continued to be applied to tube pellet 610 until tube pellet 610 exits the other end of tube 40 so that tube pellet 610 can be retrieved from the other end of tube 40. Alternatively, after hydraulic pressure has be applied to clean tube 40, a vacuum may be applied to tube 40 to retrieve tube pellet 610 from tube 40. If more thorough pre-cleaning of inside surface 45 is desired, the above process may be repeated. Moreover, tube pellet 610 may be impregnated with a suitable cleaning chemical or solvent that is applied to inside surface 45 for enhancing the pre-cleaning process. After the pre-cleaning process is completed, cleaning assembly 570 is removed from tube 40.

Tube slug stringer device 620 provides an alternative method of pre-cleaning inside surface 45. In this alternative method, stringer cap 640 is first threadably disengaged from distal end 632. Next, at least one slug 635 having a slug bore 636 is placed on stringer 630 such that stringer 630 is matingly received through slug bore 636 and so that slug 635 is supported by support platform 650. Then, stringer cap 640 is threadably engaged into distal end 632 of stringer 630. Support platform 650 is thereafter slidably adjusted along stringer 630 until slug 635 abuts stringer cap 640. When slug 635 abuts stringer cap 640, support platform 650 is caused to be affixed to stringer 630 by tightening screw 656 against stringer 630. Tube pellet stringer device 620, having slug 635 connected thereto, is transported to and inserted in tube 40 by any suitable means such as by a remotely operated mechanical arm (not shown). Stringer 630 then may be advanced and/or retracted inside tube 40 by any suitable means, such as by operating the reversible stringer drive motor (not shown) which may have friction rollers therein capable of contacting the outside surface of stringer 630 and thereby moving stringer 630 inside tube 40 for cleaning inside surface 45. As stringer 630 moves in tube 40, slug 635 cleans inside surface 45 by mechanically removing foreign matter which may be present on inside surface 45. If more thorough pre-cleaning of inside surface 45 is desired, the above process may be repeated. Moreover, slug 635 may be impregnated with a suitable cleaning chemical or solvent that is applied to inside surface 45 for enhancing the pre-cleaning process. After the pre-cleaning process is completed, pellet stringer device 620 is removed from tube 40.

The method of using pen rubber mold maker apparatus 170 further includes the step of coating the portion of inside surface 45 to be inspected with a suitable fluorescent or non-fluorescent dye penetrant. Coating inside surface 45 may be accomplished by inserting spray wand 510 into tube 40 and operating pumping device 550 for pumping dye penetrant from dye penetrant reservoir 560 into tubular carrier 530. Pumping device 550 is operated such that dye penetrant flows from dye penetrant reservoir 560 into carrier 530, which may be partially wound about carrier coiler 540, into wand 510, out spray orifice 520 and onto inside surface 45. The dye penetrant is allowed to reside or dwell on inside surface 45 a sufficient time, such as approximately 10 minutes, for penetration of surface indications that may be present in inside surface 45. The dye penetrant will penetrate and be pulled into the indications by the well known process of capillary action. Alternatively, tube pellet cleaning assembly 570 may be used to apply the dye penetrant by first soaking tube pellet 610 with dye penetrant and operating cleaning assembly 570 in the manner described above so that inside surface 45 is swabbed with the dye penetrant. In addition, tube pellet stringer device 620 may be used as an alternate means for applying the dye penetrant by first soaking slug 635 with dye penetrant and operating pellet stringer device 620 in the manner described above. Following the application of dye penetrant to inside surface 45 of tube 40, cleaning assembly 570 is removed from tube 40.

The method of the invention may also include the preparation of mold material 192, which is used to obtain the permanent negative replica image of the tube indications. Mold material 192 may comprise silicone rubber suitably proportionally mixed with a curing catalyst. The silicone rubber and curing catalyst should be suitably mixed, by any appropriate means, to avoid introducing air into the mixture so that a sharp negative replica image of the indication is obtainable. However, if air is introduced into mold material 192 during the mixing process, the air may be removed by exposing the mixture to a vacuum. As described below, mold material 192 properly prepared is then introduced into chamber 300.

In order to introduce the prepared mold material 192 into chamber 300, shaft 230 is disconnected from container 190 by threadably disengaging external threads 390 on proximal end 370 of shaft 230 from internal threads 336 of threaded bore 335. Mold material 192 is then introduced into chamber 300, such as through bore 335. The amount of mold material 192 introduced into chamber 300 should be sufficient to fill passageway 400 and cavity 270 when pen rubber mold maker apparatus 170 is operated. Shaft 230 is reconnected to container 190 by threadably engaging shaft 230 in threaded bore 335. Container 190 having shaft 230 connected thereto and mold material 192 therein is transported to and inserted in tube 40 by any appropriate means, such as by a remotely operated mechanical arm (not shown). Pen rubber mold maker apparatus 170 is then translated in tube 40 to a predetermined location along inside surface 45 where the tube indications reside. Pen rubber mold maker apparatus 170 is translated in tube 40 by any appropriate nient means, such as by a reversible friction drive motor (not shown) having friction rollers therein for engaging conduit 280 and thereby advancing and/or retracting pen rubber mold maker apparatus 170 in tube 40. Pen rubber mold maker apparatus 170 is advanced in tube 40 until the indication in inside surface 45 is between upper flange 250 and lower flange 260 such that replicate cavity 270 includes the indication to be inspected.

After the pen rubber mold maker apparatus is advanced to the predetermined location of the indication, hydraulic fluid is caused to flow from fluid reservoir 290, into conduit 280, through channel 330, into chamber 300, and against piston bottom 350 for exerting hydraulic pressure against piston bottom 350 so that piston 340 moves toward second chamber end 320. Alternatively, piston 340 may be moved toward second chamber end 320 by suitably operating drive motor 450 in a manner that pushes pole 440 (to which piston bottom 350 may be connected) and hence piston 340 toward second chamber end 320. Of course, as piston 340 is pushed toward second chamber end 320, the mold material is pushed toward second chamber end 320 and into passageway 400. As piston 340 continues toward second chamber end 320, mold material 192 now disposed in passageway 400 exits passageway 400 through outlet port 410 and flows into cavity 270. A sufficient quantity of mold material 192 should be caused to flow into cavity 270 so that the indication is covered thereby. Mold material 192 is allowed to remain at the site of the indication for a predetermined curing time such that a resilient mold is formed. Following curing of mold material 192, pen rubber mold maker apparatus 170 is retrieved from tube 40 by any appropriate means such as by suitably operating drive motor 450 and/or the mechanical arm referred to above.

Following the retrieval of pen rubber mold maker apparatus 170 from tube 40, the mold is visually inspected for a negative replica image of the indication. During the mold making process described above, dye penetrant which may have been present in the indication will have been pulled into the negative replica image of the indication due to capillary action. Therefore, mold material 192 acts as a developer that pulls the dye penetrant from the indication by capillary action. Thus, when the mold is visually examined following retrieval of mold maker apparatus 170 from tube 40, the negative replica image of the indication will be easily ascertainable in relief. If visible dye penetrant was applied to inside surface 45, the negative replica image of the indication will be visible and accurately measurable under normal lighting conditions. On the other hand, if fluorescent dye penetrant was applied to inside surface 45 for enhancing the visibility of the image, the negative replica image of the indication will be visible when exposed to black light. The mold may be removed from shaft 230 by longitudinally cutting through the mold with a knife or the like and peeling the mold from shaft 230. If desired, inside surface 45 may be cleaned following retrieval of mold maker apparatus 170 by following a post-cleaning process which is the same process as the pre-cleaning process. The post-cleaning process removes residual dye penetrant from inside surface 45. It will be appreciated that the method described hereinabove also can be used to precisely and accurately determine the inside dimension of tube 40 as well as to precisely and accurately determine the extent of indications present in inside surface 45.

Although the invention is illustrated and described herein in several embodiments, it is not intended that the invention as illustrated and described be limited to the details shown, since various modifications may be obtained with respect to the invention without departing from the spirit of the invention or the scope of equivalents thereof.

Therefore, this invention provides an apparatus and method for inspecting the inside surface of a tubular member such that a permanent record of relatively small indications present in the surface can be obtained and accurately measured.

## Claims

1. An apparatus (170) for obtaining a negative replica image of small indications in the inside surface (45) of a tubular member (40) characterized by:

(a) a container (190) defining a mold material chamber (300) therein for receiving a mold material (192), the chamber (300) having a first chamber (310) end and a second chamber end (320);

(b) a piston (340) matingly slidably disposed in the chamber (300) for pushing the mold material (192) through the chamber (300), said piston (340) having a piston (340) bottom facing the first chamber end (310) and a piston head (360) facing the second chamber end (320); and

(c) a shaft (230) connected to said container (190) said shaft (230) having an external surface thereon and having a passageway (400) therein in communication with the chamber (300) for receiving the mold material (192) from the chamber (300), said shaft (230) having an outlet port (410) extending from the passageway (400) in said shaft (230) to the external surface of said shaft (230) for exiting the mold material (192) from the passageway (400) to the inside surface (45) of the tubular member (40).

2. The apparatus (170) according to claim 1, wherein said shaft (230) further comprises a plurality of flanges (250, 260) for confining the mold material (192) to a portion of the inside surface (45) of the tubular member (40) for obtaining a negative replica image of the portion of the inside surface (45) of the tubular member (40).

3. The apparatus according to claim 2, wherein said plurality of flanges (250, 260) further comprise:

(a) an upper flange (250) outwardly extending from said shaft (230) to near the inside surface (45) of the tubular member (40);

(b) a lower flange (260) spaced-apart from said upper flange (250) and outwardly extending from said shaft (230) to near the inside surface (45) of the tubular member (40), said upper flange (250) and said lower flange (260) having the outlet port (410) interposed therebetween, said upper flange (250), said lower flange (260), said shaft (230) and the inside surface (45) of the tubular member (40) defining a replicate cavity (270) for confining the mold material (192) therein to obtain a negative replica image of the portion of the inside surface (45) of the tubular member (40).

4. The apparatus (170) according to claim 3, wherein said upper flange (250) has an upper beveled surface (420) thereon upwardly extending from said shaft (230) to near the inside surface (45) of the tubular member (40) for confining the mold material (192) in the cavity (270) defined by said upper flange (250), said lower flange (260), said shaft (230) and the inside surface (45) of the tubular member (40).

5. The apparatus (170) according to claim 3, wherein said lower flange (260) has a lower beveled surface (430) thereon downwardly extending from said shaft (230) to near the inside surface (45) of the tubular member (40) for confining the mold material (192) in the cavity (270) defined by said upper flange (250), said lower flange (260), said shaft (230) and the inside surface (45) of the tubular member (40).

6. The apparatus (170) according to claim 1, wherein said shaft (230) is flexible.

7. The apparatus (170) according to claim 3, further comprising a pole (440) connected to the piston bottom (350) for translating said piston (340) through the chamber (300).

8. A method for obtaining an image of the inside surface (45) of a tubular member (40), characterized by the steps of:

(a) cleaning the inside surface (45) for removing foreign matter to obtain a sharp image of the inside surface (45);

(b) mixing a quantity of silicone rubber with a quantity of curing catalyst in a predetermined ratio for obtaining a mold material (142); and

13

(c) coating the inside surface (45) with a fluorescent or non-fluorescent dye penetrant for enhancing the visibility of the record of indications.

9. The method of claim 8, wherein the step of cleaning the inside surface (45) of the tubular member (40) further comprises the step of pushing a tube pellet (610) along the inside surface (45) for cleaning the inside surface (45) by mechanically removing foreign matter from the inside surface (45).

10. The method of claim 8, wherein the step of cleaning the inside surface (45) of the tubular member (40) further comprises the steps of
(a) impregnating a tube pellet (610) with a cleaning chemical; and
(b) pushing the tube pellet (610) along the inside surface (45) for cleaning the inside surface (45) by mechanically and chemically removing foreign matter from the inside surface (45).

11. The method of claim 8, wherein the step of cleaning the inside surface (45) of the tubular member (40) further comprises the step of advancing a stringer (620) having at least one slug (635) connected thereto inside the tubular member (40) for cleaning the inside surface (45) of the tubular member (40) by mechanically removing foreign matter from the inside surface (45).

12. The method of claim 8, wherein the step of cleaning the inside surface (45) of the tubular member (40) further comprises the steps of:
(a) impregnating at least one slug (635) with a cleaning chemical; and
(b) advancing a stringer (620) having the slug (635) connected thereto inside the tubular member (40) for cleaning the inside surface (45) of the tubular member (40) by mechanically and chemically removing foreign matter from the inside surface (45).

13. The method of claim 8, further comprising the steps of:
(a) applying the mold material (192) against the inside surface (45); and
(b) curing the mold material (192) against the inside surface (45) for obtaining a mold of the inside surface (45).

14. The method of claim 13, wherein the step of applying the mold material (192) against the inside surface (45) further comprises the steps of
(a) introducing the mold material (192) into a mold maker apparatus (170) having a chamber (300) having a piston (340) disposed therein;
(b) inserting the mold maker apparatus (170) into the tubular member (40);
(c) advancing the mold maker apparatus (170) to a predetermined location on the inside surface (45) wherein the indication resides; and
(d) moving the piston (340) so that the mold material (192) exits the mold maker apparatus (170) at least until the indication is covered thereby.

15. The method of claim 8, wherein the step of coating the inside surface (45) with a dye penetrant further comprises the steps of:
(a) inserting a spray wand (510) into the tubular member (40);
(b) operating a pumping device (550) for pumping dye penetrant from a dye penetrant reservoir (560) into a tubular carrier (530) connected to the spray wand (510);
(c) spraying the dye penetrant from the spray wand (510) onto the portion of the inside surface (45) to be inspected when the pumping device (550) is operated; and
(d) allowing the dye penetrant to dwell on the inside surface (45) a sufficient time for penetration of indications present in the inside surface (45).

14

EP 0 337 700 A2

FIG.1

FIG.2

FIG. 3

FIG. 4

FIG. 5

# FIG.6

# FIG.7

FLUID
RESERVOIR

FLUID
RESERVOIR

# FIG.8

40
45
510
520
525
530
536
540
535
530
550

DYE
PENETRANT
RESEVOIR

560

# FIG.9

40
45
610
600
570
590
580

FIG.10

FIG.11